# NEW EUROPEAN PATENT SPECIFICATION

(11) **EP 1 608 231 B2**
(45) Date of publication and mention of the opposition decision: **05.08.2020**
(45) Mention of the grant of the patent: 10.10.2012
(21) Application number: 04758686.2
(22) Date of filing: 01.04.2004
(51) Int. Cl.: A23K 40/25, A23K 50/42

(54) **PET FOOD COMPOSITION AND METHOD**
HAUSTIERFUTTER UND VERFAHREN ZUR HERSTELLUNG
COMPOSITION D'ALIMENTS POUR ANIMAUX DOMESTIQUES ET PROCÉDÉ ASSOCIÉ

(30) Priority: 02.04.2003 US 405742
(43) Date of publication of application: 28.12.2005
(73) Proprietor: Hill's Pet Nutrition, Inc., Topeka, KS 66603 (US)
(72) Inventor: CLARK, Harry, M., Topeka, Kansas 66610 (US); SCHOENHERR, William, D., Hoyt, Kansas 66440 (US); COWLEY, Craig, R., Meriden, Kansas 66512 (US); FRIESEN, Kim, G., Topeka, Kansas 66614 (US)
(74) Representative: Wichmann, Hendrik
(86) International application number: PCT/US2004/009958
(87) International publication number: WO 2004/089107

(56) References cited:
- EP-A1- 0 665 051
- EP-A1- 0 720 816
- WO-A-01/11964
- WO-A1-98/16121
- NL-A- 7 100 755
- US-A- 3 192 047
- US-A- 3 627 537
- US-A- 3 666 491
- US-A- 4 888 198
- US-A- 4 981 711
- US-A- 5 538 748
- US-A- 5 783 240
- US-A- 6 103 290
- US-B1- 6 410 063
- DIEZ M ET AL: "WEIGHT LOSS IN OBESE DOGS: EVALUATION OF A HIGH-PROTEIN, LOW-CARBOHYDRATE DIET" JOURNAL OF NUTRITION, WISTAR INSTITUTE OF ANATOMY AND BIOLOGY, PHILADELPHIA, PA,, US, vol. 132, no. 6, SUPPL 2, June 2002 (2002-06), pages 1685S-1687S, XP008013139 ISSN: 0022-3166

## Description

### Background of the Invention

*Pet food for dogs and cats have been primarily prepared by extrusion. A heated food mass which is sufficiently plastic to be extruded using an ordinary screw extruder wherein expansion of the food occurs is worked in the extruder and emerges from the extruder usually in a strand or flat type rectangular sheet, depending upon the die shape, and is then cut and*/*or shaped into discrete particles. In this manner, dry diets utilizing kibbles, a particular discrete particle, are prepared. These kibbles should be dimensionally stable. That is, they retain the same shape as when immediately prepared and then packaged. They do not spontaneously crumble or lose fines to any great extent, even when subjected to mild pressure. Over time the physical and dimensional stability of the kibble is maintained. All compounds of the particle matrix are maintained.*

*This physical integrity of the extruded shape is at least partially dependent upon the chemical nature of the extruded material. When carbohydrate content is low, generally below about 15 wt % of the food composition, expansion of the food mass during the extrusion process is significantly retarded because of the reduced matrix formation generally obtained from the presence of carbohydrate such as a starch or grain. - The low carbohydrate, relatively high protein, relatively high fat food masses when extruded under normal conditions do not expand significantly, thereby providing a discrete particle which is not dimensionally stable. Additionally, the discrete particle can have difficulty retaining added fat, particularly when the fat is added to the outside of the particle, such as by spraying. Such extruded particle is not dimensionally stable and can not be packaged for appropriate commercial use.*

WO01/11964 is directed to ectoparasiticidal aqueous suspension formulations of spinosyns.

Diez et al 2002 (Journal of Nutrition, Volume 132, pages 16855 to 16875) discloses an evaluation of a high protein low carbohydrate diet and its effects on weight loss in obese dogs.

US3192047 discloses a method for feed preparation.

US4888198 discloses a compressed texturized soy protein product and process for making the same.

US5783240 discloses a method of producing high protein, high fat sinking aquatic feed.

EP0720816 discloses a method of manufacturing a food product.

US3666491 discloses an instant soup product and method of preparation.

US5538748 discloses a process for mixing fluid materials.

US3627537 discloses a soy food product.

US4256771 discloses a continuous gelatinization process.

US4981711 discloses a texturized sinking food for marine life.

*It has now been discovered that a low carbohydrate, relatively high protein and fat content pet food can be successfully extruded into a discrete particle, which is dimensionally stable. It has the physical attributes of typical commercial pet foods with much higher levels of carbohydrate.*

*Additionally where fat absorption can be a problem, the article matrix is able to absorb and retain fat.*

### Summary of the Invention

*In accordance with the invention, there is a method of preparing discrete pet food particles according to claim 1.*

### Detailed Description of the Invention

*The pet foods included are those useful primarily for dogs and cats. These foods are high in protein and fat and little or no carbohydrate and are dry as opposed to a wet diet such as chunk and gravy. Protein levels are a minimum of about 25, 30, or 40 wt % of the diet with a maximum of about 50, 60 or 70 wt % of the diet. The fat content is a minimum of about 15, 20, 25 or 30 wt% and not to exceed about 70, 60, 50 or 45 wt %. The carbohydrate content based on nitrogen free extract, "NFE"', is a minimum of 7 wt. % with a maximum of 12 or 10 wt %. All numbers are on a dry matter basis. When the term diet is used, this refers not only to a food product which provides most, if not all, the nutrition for a pet but also refers to such items as a snack, treat or supplement and the like.*

*The protein can come from any source but because of the low carbohydrate level, a protein source with low carbohydrates is particularly preferred. Examples of such protein sources are animal sources such as pork protein isolate and veal protein isolate and the like as well as vegetable sources such as soy protein isolate, corn gluten meal and the like.*

*The fat source can be any source, which provides fat to the pet food. Examples of such sources are beef tallow, poultry fat, soybean oil, canola oil, sunflower oil, fish oil, lard and choice white grease. The fat can be incorporated completely within the pet food, deposited on the outside of the food or a mixture of the two methods. Generally, fat on the exterior of the food brings about an increase in palatability to the pet.*

*The carbohydrate can enter the food as part of another source such as protein but also can be present through specifically added carbohydrate sources such as starches and grains. Examples of such carbohydrate sources include a starch such as corn starch or wheat starch or mixtures thereof and a grain which can be greater than 50% starch such as corn, sorghum, barley, wheat, rice and the like as well as mixtures thereof. A specific carbohydrate source such as a starch, however, is not necessary.*

*The preparation of a dry extruded pet food with the very low quantity of sugar therein, with discrete particles which are dimensionally stable is not readily accomplished. By dimensionally stable means having physical integrity i.e., not readily losing its shape or shedding significant amounts fines, particularly when the food is in discrete particles such as kibbles, bits and the like in a bag filled with the materials. Additionally, such a food often does not readily retain its fat content in a cohesive manner, particularly when the fat is deposited on the exterior of the discrete particle. Non-adherence can be visually observed. These problems are further accentuated by using a high quantity of protein. Protein isolates, which are generally used when there is a high protein content, particularly the vegetable isolates, make it even more difficult to successfully extrude a dry pet food having discrete particles which are dimensionally stable.*

*Utilizing a standard Wenger X-135 single screw extruder preferred, or an X-235, with a preconditioner under standard operating conditions and a high protein, high fat, low carbohydrate diet, dimensionally stable discrete particles of the pet food were not prepared. After much work, it was found that increasing the shear in the extruder created an extruded pet food which was processed into discrete particles which were dimensionally stable even with low levels of carbohydrate therein. The increased shear produces a pet food discrete particle, which is generally of a higher density than the discrete particle produced under normal shear processing conditions. Increased shear during the processing can be produced in many ways, for example cut flight screws, lobe locks, steam locks, and straight ribbed liners. According to the invention, the method of increasing the shear is through the use of a Venturi plate in the extruder. This is a metal plate which covers or essentially covers the cross section of the extruder. It increases shear by restricting extrudate flow in the extruder barrel. The plate has at least one hole in it through which the processed pet food product flows and thereafter leaves the extruder exit die. The use of this Venturi plate brings about increased mechanical shear into the extruded pet food product. The discrete particles prepared post exit die by this process are generally of a greater density. They are physically dimensionally stable in that they resist crumbling and forming significant levels of fines after preparation.*

*An example of an extruder with the insertion of a Venturi plate used in the process is now provided. The first step in extrusion is to precondition the ground, raw dry mix ingredients (grains if present, meals, vitamins*/*minerals,* etc.) into a hot, moist mix of approximately ∼93°C (200°F) and 20% moisture using *high temperature steam and hot water. This moistened material is delivered into the inlet section of the extruder for example a Wenger X- 135 by gravity and immediately conveyed, through the barrel segments by the rotating extruder screw elements. The machine design in the Wenger X-135 has 7 sections, called heads, with 1 screw element and one liner element per head. The first 5 sections of the extruder are single flighted screws. This mixing action in this portion of the extruder is commonly referred to as shear. The art often refers to this as the metering or conveyance zone.*

*As product transitions into head 6 of the Wenger X-135 extruder there is a double flighted screw element with the corresponding head containing a straight rib liner. The forward conveyance of the material slows down considerably and pressure increases exponentially in this section contributing greatly to the amount of cooking. The straight rib liner causes significant amounts of shear to be added to the extrudate. A steam lock contributes to shear and mixing of the product. This would be called the pressurization zone.*

*The final head # 7, is conical shaped and contains a spiral liner and is referred to as the cooking zone. The conical shaped screw element is double flighted. The flighting on this element is interrupted, or cut flight as is commonly called, adding greatly to the mixing action (shear) on the extrudate and completing the cook.*

*A Venturi plate is in the spacer section after the head 7 element. The Venturi plate is generally located relatively near the die opening. This is simply a round disk with a hole in the center. The size of the hole affects the shear. A smaller hole adds more restriction and hence more shear. The product passes through this opening prior to entering the die where it flows from the extruder and formed into the desired shape and then cut into discrete particles. Manipulation of steam and water allows the appearance and final product density to be altered.*

*Below are two examples of an attempt to prepare a dimensionally stable discrete particle as well as a successful example. In all of the examples, a standard Winger X 135 extruder was employed. It was equipped with an Acrison loss in weight feeder and a DDC-7 preconditioning cylinder. As the formed cooked product exits the extruder die, it is cut into a desired length kibble using a rotating knife assembly.*

*The cut individual kibbles are then transferred into a multi-stage horizontal belt dryer and the wet kibbles are dried down to the desired moisture level of usually less than about 11 wt %. Following the dryer, the dried kibbles are screened to remove fines and the kibbles and are coated with additional liquid (fat) and dry ingredients designed to meet nutritional targets and to improve animal acceptability (palatability).*

*In the formula below all numbers are on a dry matter basis.*

### Comparative Example 1

*A pet food comprising 62 wt % corn gluten meal, 24 wt % poultry meal, 11 wt % soy isolate and 3 wt % minerals and vitamins had the following nutrient composition:*

| | |
|---|---|
| *Protein* | *59.6%* |
| *Fat* | *22.0%* |
| *Fiber* | *0.85%* |
| *NFE* | *11.5%* |

*This formula was produced without the Venturi plate. The kibble was brittle. 10 to 25% of the dried kibble broke and was therefore unacceptable for sale. This product would not have been strong enough to withstand the harsh handling from the cooler to the packaging line. Fat absorption was a problem, as 2 to 10% of the fat would not stay within the kibble.'*

### Comparative Example 2

*A pet food comprising 57 wt % corn gluten meal, 29 wt % poultry meal, 12 wt % pork protein isolate, 2 wt % dry egg and 5 wt % vitamins, minerals, and other nutrients had the following nutrient composition:*

| | |
|---|---|
| *Protein* | *59.0%* |
| *Fat* | *25.0%* |
| *Fiber* | *0.85%* |
| *NFE* | *9.80%* |

*This formula was produced without the Venturi plate. The kibble was brittle and was greater than 10% broken. Fat absorption was an issue, as 2 to 5% of the fat did not bind to the matrix.*

### Example 1

*The same pet food as in Comparative Example 2 was produced under the same operating conditions but was processed with the presence of a* Venturi plate (Wenger, Part No. 28299-3) with 0.9 cm (0.35 inch) opening and a total diameter of 14.4 cm (5.65 inches). A strong kibble was produced with less than *5% fines. The kibble did not have a fat absorption issue since less than 1 % of the total fat was lost from the product.*

## Claims

1. A method for preparing pet food discrete particles comprising:
extruding the pet food in an extruder which comprises a Venturi plate and a die,
wherein the carbohydrate content of the pet food is a minimum of 7 wt. %, with a maximum of 12 or 10 wt. %, based on nitrogen free extract, on a dry matter basis,
wherein the Venturi plate has at least one hole through which pet food flows prior to entering the die,
wherein the Venturi plate restricts extrudate flow in the extruder, and wherein the pet food discrete particles are dimensionally stable such that they retain the same shape as when immediately prepared and then packaged.

2. A pet food discrete particle obtainable by the method of claim 1, wherein the pet food discrete particle has protein in the range of 25 to 70 wt. %.

3. A pet food discrete particle obtainable by the method of claim 1, wherein the pet food discrete particle has fat in the range of 15 to 70 wt. %.

## Patentansprüche

1. Verfahren zur Herstellung von einzelnen Tierfutterteilchen, bei dem:
das Tierfutter in einem Extruder, der ein Venturiblech und eine Düse ausweist, extrudiert wird,
wobei der Kohlenhydratgehalt des Tierfutters mindestens 7 Gew.-% und maximal 12 oder 10 Gew.-% der Trockenmasse beträgt, basierend auf stickstofffreiem Extrakt,
wobei das Venturiblech mindestens eine Öffnung besitzt, durch die das Tierfutter strömt, bevor es in die Düse eintritt,
wobei das Ventriblech den Strom von Extrudat in den Extruder beschränkt, und wobei die einzelnen Tierfutterteilchen so dimensionsstabil sind, dass sie die gleiche Form behalten wie bei unverzüglicher Herstellung und anschließender Verpackung.

2. Einzelnes Tierfutterteilchen, erhältlich nach dem Verfahren gemäß Anspruch 1, wobei das einzelne Tierfutterteilchen Protein im Bereich von 25 bis 70 Gew.-% enthält.

3. Einzelnes Tierfutterteilchen, erhältlich nach dem Verfahren gemäß Anspruch 1, wobei das einzelne Tierfutterteilchen Fett im Bereich von 15 bis 70 Gew.-% enthält.

## Revendications

1. Procédé de préparation de particules discrètes d'aliment pour animaux de compagnie, comprenant :
l'extrusion de l'aliment pour animaux de compagnie dans une extrudeuse qui comprend une plaque Venturi et une filière,
dans lequel la teneur en hydrates de carbone de l'aliment pour animaux de compagnie est un minimum de 7 % en poids, avec un maximum de 12 ou 10 % en poids, par rapport à un extrait sans azote, sur une base de matière sèche,
dans lequel la plaque Venturi a au moins un trou à travers lequel s'écoule l'aliment pour animaux de compagnie avant d'entrer dans la filière,
dans lequel la plaque Venturi restreint l'écoulement d'extrudat dans l'extrudeuse, et dans lequel les particules discrètes d'aliment pour animaux de compagnie sont dimensionnellement stables de sorte qu'elles conservent la même forme que lorsqu'elles sont fraîchement préparées puis emballées.

2. Particule discrète d'aliment pour animaux de compagnie pouvant être obtenue par le procédé de la revendication 1, laquelle particule discrète d'aliment pour animaux de compagnie a une teneur en protéines allant de 25 à 70 % en poids.

3. Particule discrète d'aliment pour animaux de compagnie pouvant être obtenue par le procédé de la revendication 1, laquelle particule discrète d'aliment pour animaux de compagnie a une teneur en matières grasses allant de 15 à 70 % en poids.
